# EUROPEAN PATENT SPECIFICATION

(11) **EP 3 198 457 B1**
(45) Date of publication and mention of the grant of the patent: **17.06.2020**
(21) Application number: 15843653.5
(22) Date of filing: 03.09.2015
(51) Int. Cl.: G06F 13/16, G06F 12/02

(54) **COMMON DIE IMPLEMENTATION FOR LOW POWER MEMORY DEVICES**
GEMEINSAME CHIPIMPLEMENTIERUNG FÜR SPEICHERVORRICHTUNGEN MIT GERINGEM STROMVERBRAUCH
MISE EN OEUVRE SUR PUCE COMMUNE POUR DISPOSITIFS DE MÉMOIRE

(30) Priority: 26.09.2014 US 201414498806
(43) Date of publication of application: 02.08.2017
(73) Proprietor: Intel Corporation, Santa Clara, CA 95054 (US)
(72) Inventor: BAINS, Kuljit, Olympia, Washington 98516 (US); BONEN, Nadav, 30835 Ofer (IL); COX, Christopher, Placerville, California 95667 (US); MCCALL, James, Portland, Oregon 97229 (US)
(74) Representative: Rummler, Felix
(86) International application number: PCT/US2015/048299
(87) International publication number: WO 2016/048618

(56) References cited:
- WO-A2-2005/072335
- JP-A- H01 277 946
- US-A1- 2002 112 119
- US-A1- 2004 117 566
- US-A1- 2006 067 158
- US-A1- 2006 123 169
- US-A1- 2014 149 775
- US-B1- 6 725 316

## Description

### FIELD

Embodiments of the invention are generally related to memory devices, and more particularly to a common memory device implementation for memory subsystems having different data bus bandwidth.

### COPYRIGHT NOTICE/PERMISSION

Portions of the disclosure of this patent document may contain material that is subject to copyright protection. The copyright owner has no objection to the reproduction by anyone of the patent document or the patent disclosure as it appears in the Patent and Trademark Office patent file or records, but otherwise reserves all copyright rights whatsoever. The copyright notice applies to all data as described below, and in the accompanying drawings hereto, as well as to any software described below: Copyright © 2014, Intel Corporation, All Rights Reserved.

### BACKGROUND

Computing devices use memory devices to store data and code for a processor to execute its operations. There are different types of memory devices, which are traditionally used in different contexts. For example, server devices tend to use memory devices that allow increased memory capacity per channel. Thus, memory devices with narrower interfaces tend to be selected for servers. However, such memory devices tend to consume more power, making such configurations less desirable in mobile implementations, for example. Despite a focus on power for mobile implementations, mobile devices continue to become more capable, and there is an increasing demand for memory devices that have greater memory capacities.

Low power memory devices in particular have been focused on power management. Low power memory devices have traditionally been designed with wider data bus interfaces (e.g., x32 devices, referring to a 32-bit wide data bus interface), which limits data storage capacity per channel, but can be used in more power efficient designs. The varying uses of memory devices can create issues for memory device manufacturers, which make the memory devices for the various implementations. Devices that have the same capacity but are intended for different implementations has previously required making two different memory die to allow for the different implementations. Making very similar devices that are slight variations of each other for different implementations can increase design and build costs, as well as resulting in production and inventory issues.

US 2014/0149775 discusses changing bandwidth for information transfers between devices dynamically to accommodate transitions between power modes employed in a system. The bandwidth is changed by selectively enabling and disabling individual control links and data links that carry the information. During a highest bandwidth mode for the system, all of the data and control links are enabled to provide maximum information throughout. During one or more lower bandwidth modes for the system, at least one data link and/or at least one control link is disabled to reduce the power consumption of the devices. At least one data link and at least one control link remain enabled during each low bandwidth mode.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, and/or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.
**Figure 1** is a block diagram of an embodiment of a system with a memory device that can be configured to interface with system data buses of different bandwidth.
**Figure 2** is a block diagram of an embodiment of a memory device that can interface with system data buses of different bandwidth.
**Figure 3** is a block diagram of an embodiment of a memory device that interfaces with a system data bus in a nibble mode implementation.
**Figure 4** is a block diagram of an embodiment of a memory device that interfaces with a system data bus in a byte mode implementation.
**Figure 5** is a block diagram of an embodiment of a memory device with internal routing to facilitate interfacing with a system data bus in a byte mode implementation.
**Figure 6** is a block diagram of an embodiment of a memory device with internal routing and multiplexing to facilitate interfacing with a system data bus in a byte mode implementation.
**Figure 7** is a flow diagram of an embodiment of a process for interfacing between a memory controller and a memory device to exchange data for buses of different bandwidths.
**Figure 8** is a block diagram of an embodiment of a computing system in which common die interfacing to data buses of different bandwidth can be implemented.
**Figure 9** is a block diagram of an embodiment of a mobile device in which common die interfacing to data buses of different bandwidth can be implemented.

Descriptions of certain details and implementations follow, including a description of the figures, which may depict some or all of the embodiments described below, as well as discussing other potential embodiments or implementations of the inventive concepts presented herein.

### DETAILED DESCRIPTION

As described herein, a memory device supports both full-bandwidth implementations and narrower bandwidth implementations. The memory device and a memory controller interface over a system data bus. The memory device that supports both full-bandwidth and narrower bandwidth system bus implementations allows the same memory device to be used in different configurations with a system data bus that provides greater or lesser bandwidth. To support a narrower bandwidth implementation, the memory device and memory controller can transfer data over the system data bus for a burst length of transfer periods, where the transfer includes actual data on all transfer periods but fewer bits than would be transferred in a full-bandwidth implementation. The lesser bandwidth implementation would have less bandwidth that needed to maximize the internal transfer capacity of the memory device. For example, for a memory device that supports N data bits on read or write, the memory device and memory controller can exchange N data bits in a full-bandwidth implementation or N/2 data bits in a partial or lower bandwidth implementation. Providing a mode that restricts the amount of bandwidth used by the memory device means that the number of memory devices per channel can be increased, increasing overall system capacity. Providing separate full-bandwidth and partial bandwidth modes allows use of a common memory device for different implementations. As used herein, reference to the transfer of N bits or N/2 bits or other designation will be understood as referring to the transfer of data bits, unless otherwise pointed out. Thus, a device that supports N bits on read or write will transfer N bits of data over the data bus, and may exchange other bits for command or control information or metadata.

Prior implementations of memory devices would have a separate device or a separate integrated circuit (I/C) die for each different memory implementation. Thus, memory packaged for a x16 implementation would include a different die than a memory of the same capacity packaged for use in a x32 implementation. It will be understood that x16 refers to a device with a 16-bit wide data I/O (input/output) interface, and x32 refers to a device with a 32-bit wide data I/O interface. It will be understood that the designation of a device as x16, x32, or other refers to the data bus bandwidth, and does not limit the device to exchange other bits of data on the same cycles over different connectors or buses. Other common memory device configurations include x8 and x4 devices. As described herein, a memory die can include support for multiple different implementations (e.g., x16 and x32 implementations). Thus, a common memory die can be used for different implementations. The common memory die can be packaged for different implementations, and/or be used in system on a chip (SOC) designs or multichip package designs that will interface with data buses of different bandwidths.

Low power (LP) memory devices have traditionally been used in mobile devices where lower capacity has met consumer expectations (such as mobile phones). However, the focus of LP memory devices on lower power has increased interest in the memory for computing devices that have expectations of higher capacity (such as laptops and tablets). LP memory has traditionally been available as x32 devices, which limits capacity. Thus, increasing capacity of LP memory has traditionally only been possible by stacking the memory devices deeper, which increases loading and negatively impacts higher speed memory access. In one embodiment, a memory die that enables interfacing with narrower or wider bandwidth buses can be used for either a x16 memory device implementation or a x32 memory device implementation. Thus, an LP memory die can support x16 implementations while still supporting x32 implementations. Providing a x16 implementation can double the capacity by using the same number of data pins at the system level while doubling the number of devices per rank. It will be understood that a rank of memory refers to multiple devices ganged together in parallel, which are selected and accessed together on memory access operations. It will be understood that the techniques described herein are not limited to implementation in LP memory.

Reference to memory devices can apply to different memory types. Memory devices generally refer to volatile memory technologies. Volatile memory is memory whose state (and therefore the data stored on it) is indeterminate if power is interrupted to the device. Dynamic volatile memory requires refreshing the data stored in the device to maintain state. One example of dynamic volatile memory includes DRAM (dynamic random access memory), or some variant such as synchronous DRAM (SDRAM). A memory subsystem as described herein may be compatible with a number of memory technologies, such as DDR3 (dual data rate version 3, original release by JEDEC (Joint Electronic Device Engineering Council) on June 27, 2007, currently on release 21), DDR4 (DDR version 4, initial specification published in September 2012 by JEDEC), LPDDR3 (low power DDR version 3, JESD209-3B, Aug 2013 by JEDEC), LPDDR4 (LOW POWER DOUBLE DATA RATE (LPDDR) version 4, JESD209-4, originally published by JEDEC in August 2014), WIO2 (Wide I/O 2 (WideIO2), JESD229-2, originally published by JEDEC in August 2014), and/or others, and technologies based on derivatives or extensions of such specifications.

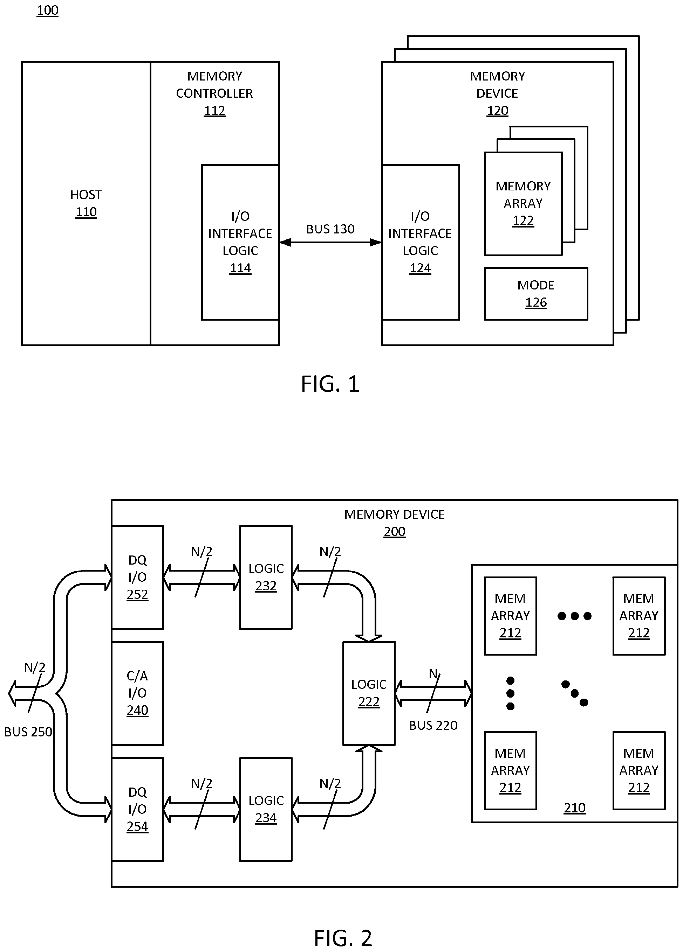

**Figure 1** is a block diagram of an embodiment of a system with a memory device that can be configured to interface with system data buses of different bandwidth. System 100 includes elements of a memory subsystem in a computing device. Host 110 represents a host computing platform that executes an operating system (OS) and applications. The OS and applications execute operations that result in memory accesses. Host 110 includes a processor or processing unit, which can be a single or multicore processor. System 100 can be implemented as an SOC, or be implemented with standalone components.

Memory controller 112 represents control logic that generates memory access commands in response to the execution of operations by the processor(s). In one embodiment, system 100 includes multiple memory controllers. In one embodiment, system 100 includes one or more memory controllers per channel, where a channel couples to access a number of memory devices. Each channel is an independent access path to memory. In one embodiment, memory controller 112 is part of host 110, such as logic implemented on the same die or package space as a host processor.

Memory controller 112 includes I/O interface logic 114 to couple to system bus 130. System bus 130 has a data bus with a bandwidth. Based on design and/or implementation of system 100, system bus 130 can have more or less bandwidth per memory device. For example, system bus 130 can be of a fixed size but use memory devices that have either a x32 or a x16 interface. The interface size of the memory devices is a controlling factor on how many memory devices can be used concurrently in system 100.

Memory devices 120 represent memory resources for system 100. Each memory device 120 includes I/O interface logic 124, which has a bandwidth determined by the implementation of the device (e.g., whether it is x16 or has some other interface bandwidth). I/O interface logic 124 and 114 can include pins, connectors, signal lines, and/or other hardware to connect the devices. System bus 130 can be implemented as multiple signal lines coupling memory controller 112 to memory devices 120. System bus 130 includes at least a command and address (C/A) portion and a data portion. The C/A portion can be referred to as a "C/A bus" and the data portion can likewise be referred to as a "data bus."

Memory devices 120 each include multiple memory arrays 122. Memory arrays 122 represent the logic where memory device 120 stores the data bits. In one embodiment, memory device 120 can be said to have an internal data bus, which refers to a number of bits that are produced in a single read prefetch, or which can be written for a write command. The bandwidth of the internal data bus will depend on the number of memory arrays and the design of the memory arrays. While not specifically shown in system 100, each memory device 120 also includes send and receive logic to determine what data to send and how to drive the signal lines of bus 130 to send the data, as well as logic to decode and route commands and addresses to memory arrays 122 for execution.

Memory devices 120 each include mode logic 126. Mode logic 126 can refer to a Mode Register or other mechanism within the memory device that stores configuration settings. In one embodiment, the implementation for a specific memory device is set within mode logic 126. Based on settings in mode logic 126, memory device 120 can operate in a way that it restricts the amount of data per transfer period of a memory access transaction. A memory access transaction refers to an operation of the memory controller sending a command to the memory device, and the memory device satisfying the request in the command. For example, a write transaction includes memory controller 112 sending a write command to memory device 120, which then stores the data at the location requested in the command. Similarly, a read transaction includes memory controller 112 sending a read command to memory device 120, which accesses the data and returns it over the data bus to memory controller 112. Memory access transactions typically take multiple cycles to complete. For example, read and write can be controlled by a burst length, which indicates a number of consecutive transfer periods in which to send/receive or input/output data over system bus 130. A transfer period is a period of one or fewer or more clock cycles in which to send a signal over a signal line of system bus 130. For purposes of system 100, mode logic 126 can also represent logic that indicates a burst length and transfer timing, which may be different logic than logic used to indicate an I/O interface mode.

For purposes of description, the I/O interface mode (e.g., x16 mode) can determine a transfer bandwidth. A transfer bandwidth refers to an amount of data transferred on system bus 130 to or from each memory device 130. In one embodiment, the transfer bandwidth can be considered for each transfer period, and would thus refer to the number of I/O connectors or pins used to exchange data with the memory controller for each transfer period. In one embodiment, the transfer bandwidth can refer to the total amount of data to be transferred for a memory access transaction, which is the number of I/O connectors multiplied by the burst length or the total number of transfer periods to complete the memory access transaction. In one embodiment, memory device 120 supports a limited bandwidth interface, where exchanges over system bus 130 for memory access transactions are only half of the number of bits of the internal data bus of the memory device. More detailed examples are provided with respect to Figures 2 through 5.

In one embodiment, memory device 120 can be considered to provide a limited bandwidth exchange by a process of sending fewer bits than were prefetched for a read, and writing to fewer locations than can be written to for a write. For a read transaction, the memory device could be considered to perform an "internal burst chop" operation. Burst chop is understood as a mechanism that causes a memory device to transfer data for only a limited number of transfer periods of a BL. For example, for a normal BL of 8, a burst chop mode may result in a transfer of data on only 4 of the transfer periods, leaving the memory device idle (not transferring data) for the other 4 transfer periods. However, traditional burst chop will still prevent access to the memory device for the other 4 transfer periods, because the system configuration prevents accessing the memory device until the end of the BL. Thus, the memory device will be idle but unavailable.

The "internal burst chop" referred to herein includes a memory device transferring data on all transfer periods of the BL (for the entire time it would be unavailable by system configuration) but does not transfer all of its data bits over the BL. Thus on a read, the memory device selectively does not send all prefetched data, but drops some (e.g., half) of the prefetched data. It will be understood that the internal burst chop described differs from traditional burst chop in that the memory device does not sit idle for half of the transfer periods, which can increase the efficiency of the implementation.

In one embodiment, mode 126 includes information about a burst length for the interface between memory device 120 and memory controller 112. For example, mode 126 can include a Mode Register that specifies one of two different burst lengths (e.g., BL16 or BL32). In one embodiment, each of the different modes of operation can operate with each of the different burst lengths.

In one embodiment, a DDR DRAM chip prefetches 256 bits per channel. In one embodiment, the DRAM chip has two burst length options, a burst length of 32 and a burst length of 16, and two different I/O interface options, a x32 option and a x16 option. In one embodiment, a common die implementation allows for 16 DQ pins per channel per die in a x32 implementation, and 8 DQ pins per channel per die in a x16 implementation. For both implementations, the DRAM chip generates an internal read prefetch of 256 bits per channel. In a x32 implementation, the DRAM chip can transfer 256 bits over 16 DQ pins using BL16 (16DQ pins ^{∗} 16 transfer periods in a 16BL implementation). In such an embodiment, the system can generate a BL32 request that results in two internal prefetches of 256 bits each. In a x16 mode, the same die can transfer all 256 bits over 32 transfer periods (8DQ ^{∗} 32BL). In one embodiment, the system can slow the core frequency of the DRAM chip because the external data transfer takes twice as long as the core cycling time. Thus, the core frequency can be cut in half to save power. Such an option can limit the number of devices in a rank to two (16 bit wide ranks). Such an option can also require more host controllers in the system.

Another option uses a burst length of 16. Such an option enables using four devices in a rank (32 bit wide ranks). In such an option, the memory device drops some of the prefetched data (an internal burst chop). In one embodiment, a signal of the read command (e.g., CA5) can select whether memory devices sends the upper or lower 128 bits of data. The upper 128 bits are prefetched from one group of memory arrays, and the lower 128 bits are prefetched from another group of memory arrays. For writes, the memory controller writes 128 bits of data, and can indicate with a control signal whether the bits are to be mapped to the upper or lower bits, similar to reads. Thus, the memory controller can determine which memory arrays store the 128 bits of data written.

**Figure 2** is a block diagram of an embodiment of a memory device that can interface with system data buses of different bandwidth. Memory device 200 can be one example of memory device 120 of system 100. In one embodiment, memory device 200 includes more elements than those illustrated. More specifically, memory device 200 illustrates a single I/O channel, where each channel internally routes N bits (e.g., 256 bits). In one embodiment, memory device 200 can include two separate channels, each capable of internally routing N bits.

Memory device 200 includes M memory arrays 212. The M memory arrays 212 are part of group 210. Memory arrays 212 can be organized in groups in any of a number of different ways. In one embodiment, group 210 includes a number of memory arrays that can read or write up to N data bits. In one embodiment, group 210 includes a number of memory arrays that can read or write up to N/2 data bits. Bus 220 represents an internal bus within memory device 200. Bus 220 has available bandwidth of N bits. In one embodiment, the available bandwidth of N bits represents bits from all M memory arrays 212.

Logic 222 represents signal lines, logic circuits, and/or other elements within memory device 200 that allow memory device 200 to route the N bits of bus 220 towards two separate I/O output locations. In one embodiment, logic 222 includes interfaces to memory arrays 212 and can select which memory arrays and locations within the arrays will be read or written for each memory access transaction. Thus, specific locations within the memory arrays can be selected for read and/or for write for each transaction. In one embodiment, logic 222 can terminate one path or the other for a specific memory access transaction. For example, on a read transaction, memory device 200 can prefetch N bits, and N/2 bits can be dropped without being sent. In one embodiment, logic 222 disables one path or the other for a write transaction.

Logic 232 and 234 represent signal lines, logic circuits, and/or other elements within memory device 200 that interfaces with data I/O connectors or pins for the memory device. Specifically, logic 232 selectively interfaces memory arrays 212 with DQ I/O 252, and logic 234 selectively interfaces memory arrays 212 with DQ I/O 254. The designation DQ I/O refers to the data bus interface. The logic elements selectively interface the I/O with the memory arrays in that the logic elements can select data bits received at the I/O connectors to be routed to and written to selected memory arrays 212. The logic elements selectively interface the I/O with the memory arrays in that the logic elements can select data bits received from memory arrays 212 to be routed and sent from DQ I/O 252 and/or DQ I/O 254.

In one embodiment, DQ I/O 252 and DQ I/O 254 straddle command/address (C/A) I/O connectors or pins 240. The data I/O connectors straddle the C/A I/O connectors in that the data I/O connectors are not all physically adjacent on the die or package, but there are two groups of data I/O connectors physically separated by C/A I/O connectors 240. Such a configuration would allow decode logic (not specifically shown) to be located "centrally" within memory device 200 relative to the signal lines from the data I/O connectors (252, 254) to memory arrays 212.

Data I/O connectors 252 and 254 interface with signal lines of system data bus 250. It will be observed that bus 250 is indicated as having a bandwidth of N/2 bits, while bus 220 has a bandwidth of N bits. Thus, bus 250 has a lower bandwidth for interfacing with memory device 200 than a total available internal bandwidth of bus 220. It will be understood that bus 250 could connect to multiple other memory devices and/or other memory device channels (e.g., if memory device 200 included another channel with a separate group of memory arrays). Thus, bus 250 could actually have a higher bandwidth than bus 220 if the signal lines of bus 250 were separated to connect separately to different memory devices. However, for purposes of interfacing with memory device 200, bus 250 is considered to have a lower bandwidth when the number of signal lines of bus 250 interfacing memory device 200 has a lower bandwidth than what bus 220 is capable of transferring within a burst length of transfer periods.

Additionally, it will be observed that bus 250 is indicated as having a bandwidth of N/2 bits, which is the same number of bits illustrated to interface to each of data I/O 252 and data I/O 254. There are any of a number of different configurations that can be provided to interface memory device 200 with bus 250. In one embodiment, for a particular transaction, all N/2 bits exchanged (either read or write) between memory device 200 and an associated memory controller (not specifically shown), are exchanged via either I/O 252 or I/O 254, while the other I/O does not exchange any bits for the transaction. Thus, I/O 252 and I/O 254 can connect to the same N/2 signal lines, and logic (e.g., logic 232, 234, 222, and/or other logic) can select which I/O to use for a particular memory access transaction.

In one embodiment, both I/O 252 and I/O 254 provide N/4 I/O connectors each to interface with bus 250. Thus, bus 250 is separated among I/O 252 and I/O 254. Internally, the N/2 possible data bits to be routed from I/O 252 to logic 232 and/or from I/O 254 to logic 234 could be N/4 bits instead of N/2 bits as shown. In one embodiment, logic 234 can select N/4 bits and route them to I/O 252 and bypass I/O 254. Thus, I/O 252 will provide all N/2 I/O interfaces, but with N/4 bits routed through logic 232, and N/4 bits routed through logic 234. It will be understood that similarly, logic 232 could select N/4 bits to route to I/O 254, bypassing I/O 252. Thus, in one embodiment, logic 232 and/or logic 234 can include multiplexing logic to selectively route signal lines between different memory arrays to the same I/O connectors.

In one embodiment, memory device 200 always generates N bits for a read by accessing data bit(s) from all M memory arrays or cores. Memory device 200 can exchange N/2 bits over bus 250 by selecting N/2 of the N bits, and dropping any other prefetched bits. In one embodiment, memory device 200 can exchange N/2 bits over bus 250 by selecting N/4 bits from two different groups of M/2 memory arrays 212 (and dropping the other N/4 bits accessed from each of the two groups of memory arrays). In one embodiment, memory device 200 can exchange N/2 bits over bus 250 by selecting N/2 bits from one group of M/2 memory arrays 212 and dropping the N/2 bits accessed from the other group of M/2 memory arrays 212.

Similarly, memory device 200 is capable of writing N bits by writing data bit(s) to all M memory arrays or cores 212. In one embodiment, memory device 200 writes N/2 bits instead of N bits by selecting M/2 memory arrays to write to, and not writing to the other M/2 memory arrays. In one embodiment, memory device 200 writes N/4 bits to one selected group of M/2 memory arrays 212, and N/4 bits to another selected group of M/2 memory arrays 212. In such a case, logic in the memory arrays can determine what bits to write, and/or select which memory arrays to write and which memory might not be written on a particular memory access transaction. Thus, for reads and writes, memory device 200 can exchange N/2 bits at one common DQ I/O or the other (252, 254) or exchange N/4 bits from both DQ I/Os. Memory device 200 can select different groups of the M memory arrays to write to or read from, and can route N/2 bits to one group or another (and none to the non-selected group), or N/4 bits each to both groups.

In one embodiment, the configuration of memory device 200 with DQ I/O 252 and DQ I/O 254 separated by C/A I/O 240 can be referred to as providing N bits from the "core," referring to the memory arrays and routing bits from the core to "top" and "bottom" nibbles or portions of the total I/O. Such reference to "top" and "bottom" will be understood to reference to which I/O connectors are designated for memory device 200 as the MSB (most significant bit) and the LSB (least significant bit), rather than a spatial orientation of the physical packaging. How to split the memory arrays or memory cores, and how to route the arrays to the I/O, and which I/O to physical locate where on the packaging are design choices. There are any of a number of configurations that will be understood by those skilled in the art.

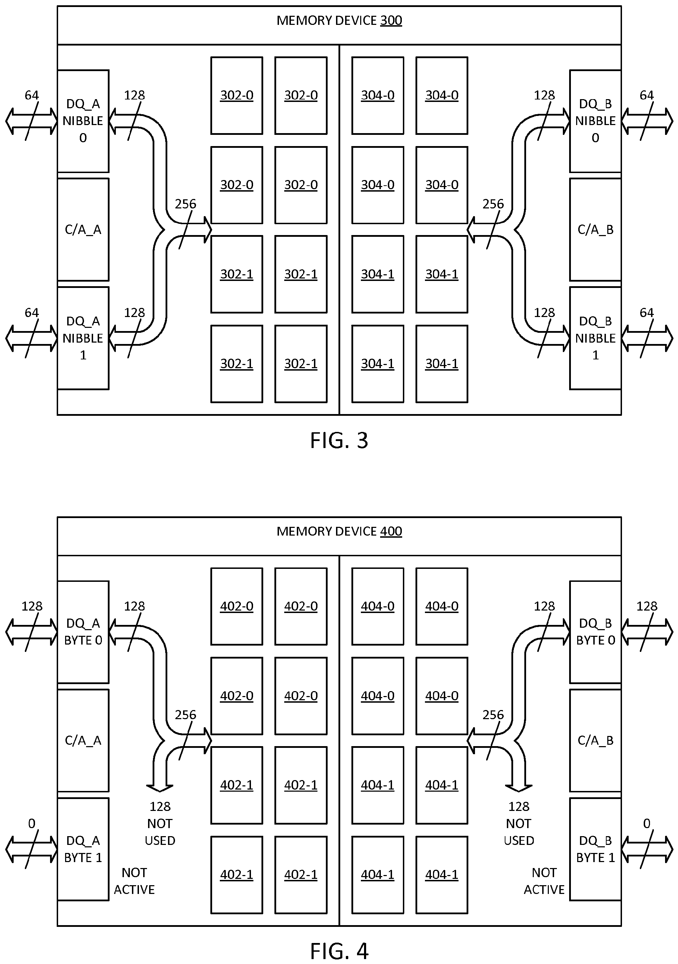

**Figure 3** is a block diagram of an embodiment of a memory device that interfaces with a system data bus in a nibble mode implementation. Memory device 300 can be one example of a memory device in accordance with memory device 200 of Figure 2. In one embodiment, memory device 300 is a x32 die with 16 cores or memory arrays. The 16 cores can be organized as two groups of 8 cores each (302, 304), where each group of 8 cores can further be thought of as two groups of 4 cores each (302-0 and 302-1, and 304-0 and 304-1). Thus, in one embodiment, memory device 300 is a x32 die organized as two channels (A and B) of x16.

As illustrated, an internal prefetch generates 256 bits per channel. Thus, each read/write transaction results in 256 bits of data transfer in normal operation. For a mode of operation where memory device transfers less than a full 256 bits of data, memory device 300 can be said to operate in nibble mode. In one embodiment, memory device 300 internally routes 128 bits of data to each I/O interface, DQ_A Nibble 0 and DQ_A Nibble 1. In one embodiment, memory device 300 operates on a burst length of BL16. In one embodiment, memory device 300 supports a burst length operation of BL32, which result in two internal transactions with 256 bit of data prefetched per internal transaction for reads. A write in BL32 would result in two internal write transactions of 128 bits each in the lower bandwidth mode of operation.

Consider that Nibble 0 is the LSB nibble for the I/O between memory device 300 and an associated memory controller. In BL16 operation for a lower bandwidth mode would indicate that DQ_A Nibble 0 and DQ_A Nibble 1 are both 4 bits wide (128 bits / 16 BL = 8 bits/transfer period, or 4 bits per nibble per transfer period). It will be understood that separating the I/O into the two separate nibbles, separated by the C/A bus can result in timing phases among the LSB and MSB nibble signal lines. Thus, nibble mode may require separate strobe or clock signals for the upper (top) and lower (bottom) nibbles. As such, nibble mode can require additional clock or strobe signals external to memory device 300, increasing the signal at package and controller (system) level.

In one embodiment, in nibble mode, memory device 300 includes logic in each channel to select what data to send and what data to drop on read transactions. On write transactions, the logic can select what cores (302-0 and/or 302-1) will receive write data. Memory device 300 exchanges data with the associated memory controller in each transfer period of the burst length, which the total exchange being fewer bits (128 bits) than the internal capacity (256 bits) of the group of memory cores (302). While reference is made to memory cores 302 and channel A, it will be understood that memory device 300 can support identical operation in memory cores 304 and channel B.

**Figure 4** is a block diagram of an embodiment of a memory device that interfaces with a system data bus in a byte mode implementation. Memory device 400 can be one example of a memory device in accordance with memory device 200 of Figure 2. In one embodiment, memory device 400 is a x32 die with 16 cores or memory arrays. Similar to memory device 300 of Figure 3, the 16 cores of memory device 400 can be organized as two groups of 8 cores each (402, 404), where each group of 8 cores can further be thought of as two groups of 4 cores each (402-0 and 402-1, and 404-0 and 404-1). Thus, in one embodiment, memory device 400 is a x32 die organized as two channels (A and B) of x16.

As illustrated, an internal prefetch generates 256 bits per channel. Thus, each read/write transaction results in 256 bits of data transfer in normal operation. For a mode of operation where memory device transfers less than a full 256 bits of data, memory device 400 can be said to operate in byte mode. In one embodiment, memory device 400 internally routes 128 bits of data to one common I/O interface per channel, DQ_A Byte 0 and DQ_A Byte 1. In one embodiment, memory device 400 operates on a burst length of BL16. In one embodiment, memory device 300 supports a burst length operation of BL32, which result in two internal transactions with 256 bit of data prefetched per internal transaction for reads. A write in BL32 would result in two internal write transactions of 128 bits each in the lower bandwidth mode of operation.

Consider that DQ_A Byte 0 is the LSB byte for the I/O between memory device 400 and an associated memory controller. Another byte interface is illustrated in memory device, but is listed as not active. In one embodiment, in byte mode, memory device 400 exchanges 128 data bits over a selected one of two possible hardware interface segments. In BL16 operation for a lower bandwidth mode would indicate that DQ_A Byte 0 is 8 bits wide (128 bits / 16 BL = 8 bits/transfer period). By sending data on only a single bus interface, the entire data can be transferred with a single strobe or clock signal. It will be understood that memory device 400 can be configured to output the data on DQ_A Byte 1, which is labeled as not active.

In one embodiment, in byte mode, memory device 400 includes logic in each channel to interface all M cores 402 with DQ_A Byte 0 (or with Byte 1, depending on the implementation). Thus, both cores 402-0 and 402-1 can interface with the associated memory controller via the common I/O connectors. An additional 128 bits prefetched on read transactions is not used, as selected by logic within memory device 400. Similarly, logic within memory device 400 selects which cores 402 to write the 128 data bits received in a write transaction. While reference is made to memory cores 402 and channel A, it will be understood that memory device 400 can support identical operation in memory cores 404 and channel B.

In one embodiment, memory device 400 includes logic to allow the dynamic selection of whether Byte 0 or Byte 1 will be used for I/O with the associated memory controller. Thus, in one embodiment, the connectors for DQ_A Byte 0 and DQ_A Byte 1 can be tied or multiplexed together. Logic within memory device 400 can allow the selection of one byte or the other to use for I/O. In one embodiment, the selection is fixed for the operation of the device. In one embodiment, the selection is controlled by a register setting (e.g., a Mode Register). In one embodiment, a signal within a memory access command can determine which byte to use.

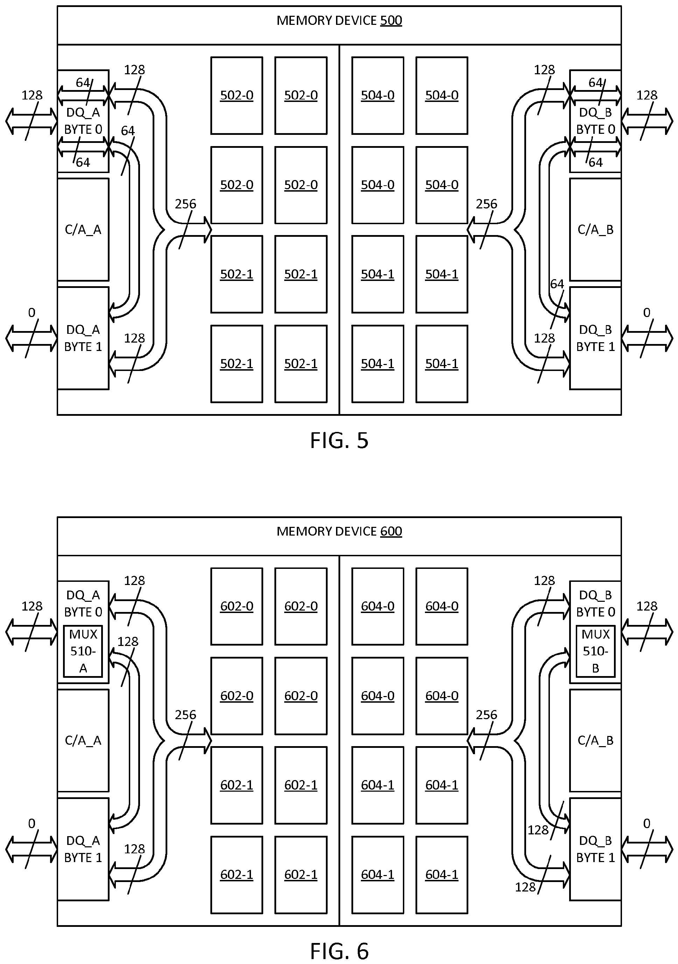

**Figure 5** is a block diagram of an embodiment of a memory device with internal routing to facilitate interfacing with a system data bus in a byte mode implementation. Memory device 500 can be one example of memory device 200 of Figure 2. In one embodiment, memory device 500 can be one example of memory device 400 of Figure 4. Memory device 400 illustrates a simplification of 128 bits being routed internally to DQ_A Byte 0, and 128 bits being not used. Memory device 500 internally routes 64 bits from group of cores 502-0 and 64 bits from group of cores 502-1. The other 64 bits from each respective group will be understood to be not used.

More specifically, cores 502-0 generate 128 bits on a read, and cores 502-1 also generate 128 bits on a read. In one embodiment, the 128 bits from cores 502-1 are routed to DQ_A Byte 1 and the 128 bits from cores 502-0 are routed to DQ_A Byte 0. In one embodiment, logic within memory device 500 selects 64 bits from cores 502-1 and internally routes them from DQ_A Byte 1 to DQ_A Byte 0, and does not send the other 64 bits. In one embodiment, the logic allows the selection of any group of 64 bits, depending on the read transaction. In one embodiment, logic in memory device 500 selects 64 bits from cores 502-0 and sends those 64 bits from DQ_A Byte 0 while not using the other 64 bits. Thus, in one embodiment, DQ_A Byte 0 transmits 128 bits for a read transaction, with 64 bits from cores 502-0 and 64 bits from cores 502-1. The same path can be used for writes, to internally route 64 of the incoming 128 bits from DQ_A Byte 0 to DQ_A Byte 1, and then to cores 502-1. It will be understood that identical logic and operations can enable similar behavior in channel B, with respect to cores 504 and I/O DQ_B Byte 0 and DQ_B Byte 1. In one embodiment, the pathway can also enable the routing of 128 bits to DQ_A Byte 1 and DQ_B Byte 1, depending on system configuration and operation.

It will be understood that extra logic to implement the routing of memory device 500 can introduce logic delay in the internal routing. The internal routing can actually be performed at a slower clock than the external data exchange that couples memory device 500 to the memory controller. The internal routing can include multiplexing elements and/or other logic elements to select how to route certain I/O connectors to internal signal lines within memory device 500. While not explicitly shown, it will be understood that the I/O interfaces can include multiplexers or comparable logic to select between multiple paths coupled to the same I/O connector, similar to what is shown more explicitly in Figure 6. Thus, in one embodiment, system 500 includes additional logic to internally route and select which internal bits can be exchanged over which I/O connectors.

It will be understood that the x16 configuration of a x32 die of memory devices 400 and 500 of Figures 4 and 5, respectively, may require more change at the DRAM than the x16 configuration of a x32 die of memory device 300 of Figure 3. However, the implementation of memory device 300 may require extra clocking signals at the system level external to the DRAM. Thus, the implementation of memory devices 400 and 500 can provide benefits of simpler system approaches, while increasing logic within the individual memory die.

**Figure 6** is a block diagram of an embodiment of a memory device with internal routing and multiplexing to facilitate interfacing with a system data bus in a byte mode implementation. Memory device 600 can be one example of memory device 200 of Figure 2. In one embodiment, memory device 600 can be one example of memory device 400 of Figure 4. Memory device 400 illustrates a simplification of 128 bits being routed internally to DQ_A Byte 0, and 128 bits being not used. Memory device 600 internally routes 128 bits from group of cores 602-0 or 128 bits from group of cores 602-1. The other 128 bits from the other group will be understood to be not used.

More specifically, cores 602-0 generate 128 bits on a read, and cores 602-1 also generate 128 bits on a read. In one embodiment, the 128 bits from cores 602-1 are routed to DQ_A Byte 1 and the 128 bits from cores 602-0 are routed to DQ_A Byte 0. In one embodiment, logic within memory device 600 internally routes the 128 bits from cores 602-1 from DQ_A Byte 1 to DQ_A Byte 0. In one embodiment, I/O logic at DQ_A Byte 0 includes multiplexing logic 610-A, which represents any logic or switching circuitry that can select between the 128 bits from cores 602-0 or the 128 bits from cores 602-1. Thus, each of two physical banks or groups can provide 128 bits of data each to operate as one logical bank. Each group has a page size of 1K, which gives an effective page size of 2K. For a read transaction, in one embodiment, DQ_A Byte 0 transmits 128, with the bits being selected from either one group of cores of the other. The same path can be used for writes, to internally route the 128 bits of the incoming data to DQ_A Byte 1 when using cores 602-1. It will be understood that identical logic and operations can enable similar behavior in channel B, with respect to cores 604 and I/O DQ_B Byte 0 and DQ_B Byte 1. It will also be understood that the roles of DQ Byte 0 and DQ Byte 1 can be reversed.

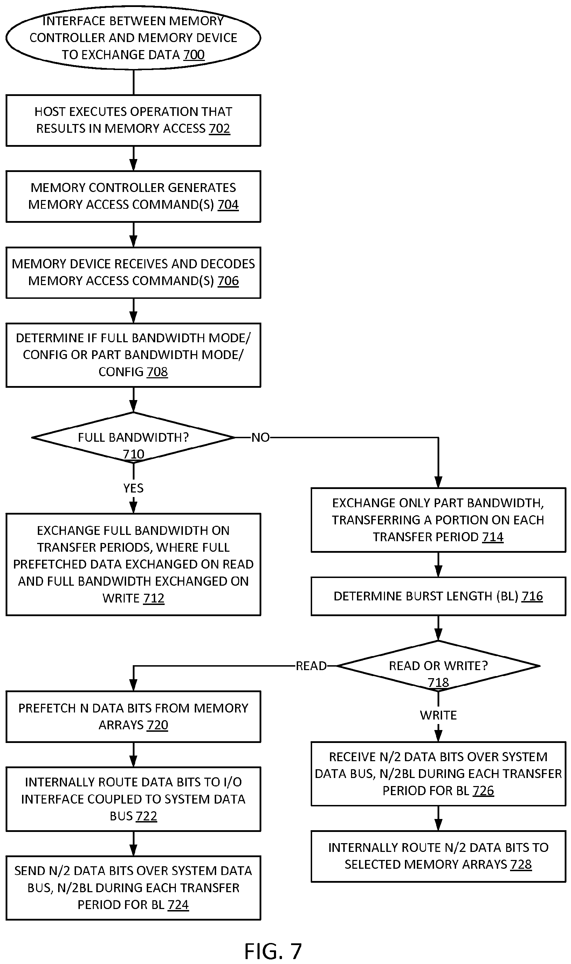

**Figure 7** is a flow diagram of an embodiment of a process for interfacing between a memory controller and a memory device to exchange data for buses of different bandwidths. More specifically, process 700 enables a common memory die to interface with a memory controller in one of two different system bus bandwidth modes, such as x32 and x16 modes. A computing system that includes a memory subsystem with the memory controller and memory device also includes a processor subsystem that executes the operations of the computing system. The processor subsystem can include a host processor and/or various other processor circuits that execute operations that result in memory access, 702. The computing system can be a standalone system such as a laptop or tablet, or can be a portion of a larger system.

The memory controller generates one or more memory access commands to accomplish the memory access, 704. In one embodiment, the memory controller is part of the host. The memory device receives and decodes the memory access commands from the memory controller, 706. The memory device decodes the memory access command to determine whether the command is targeted for the memory device, and what operations to execute in response to the command, assuming it is the targeted memory device.

In one embodiment, the memory device determines if it should operate in full bandwidth mode/configuration or a partial bandwidth mode/configuration, 708. In one embodiment, the memory device determines the full or partial bandwidth mode by accessing a Mode Register or other configuration logic. If the mode of operation is full bandwidth, 710 YES branch, the memory device exchanges the full internal bandwidth on the transfer period, 712. The full bandwidth will be understood to be an amount of data that the memory device is capable of writing to or reading from the memory cores in one memory access transaction. Thus, on a read transaction, the memory device sends the full amount of data prefetched from the memory cores. On a write transaction, the memory device receives a full bandwidth of data from the memory controller and routes the full bandwidth of data to the memory cores.

If the mode of operation is partial bandwidth, 710 NO branch, the memory device exchanges only part of the full bandwidth during the transfer periods, transferring some data on each transfer period, 714. In one embodiment, the memory device determines a burst length for the transfer. In one embodiment, the memory device can determine a burst length for a full bandwidth transfer as well as a partial bandwidth transfer, where a longer burst length can result in two consecutive internal memory access operations. In the partial bandwidth exchange, the different burst length options can be used with I/O interfaces of different widths to determine how to transfer data.

The memory device executes the memory access transaction to exchange data with the memory controller. If the memory access transaction is a read, 718 READ branch, the memory device prefetches N data bits from the memory arrays or cores, 720. The memory device can access all memory arrays in a channel to generate the N data bits. The memory device internally routes the data bits to a hardware I/O interface that couples the memory device to the memory controller via the system data bus, 722. The internal routing can be in accordance with any embodiment described herein, allowing the memory device to route N/2 bits to a common group of I/O connectors, and/or route N/4 bits to each of two groups of I/O connectors. Thus, the memory device sends N/2 data bits over the system data bus, transferring N/2BL bits during each transfer period for the entire determined burst length, 724.

If the memory access transaction is a write, 718 WRITE branch, the memory device receives N/2 data bits over the system data bus, receiving N/2BL bits on each transfer period for the entire burst length, 726. The memory device internally routes the N/2 data bits to selected memory arrays, 728. The internal routing can be in accordance with any embodiment described herein, allowing the memory device to route the N/2 bits as N/2 bits from a common group of I/O connectors to any combination of the memory arrays, and/or route N/4 bits from each of two groups of I/O connectors to any combination of the memory arrays.

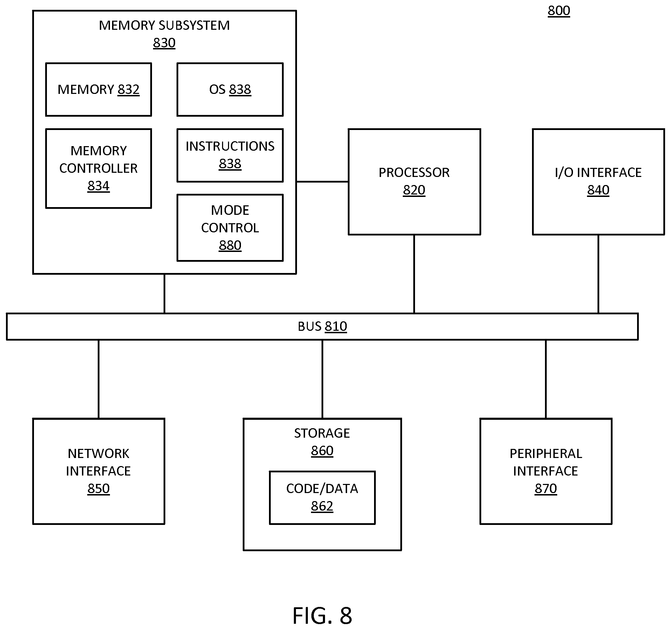

**Figure 8** is a block diagram of an embodiment of a computing system in which common die interfacing to data buses of different bandwidth can be implemented. System 800 represents a computing device in accordance with any embodiment described herein, and can be a laptop computer, a desktop computer, a server, a gaming or entertainment control system, a scanner, copier, printer, routing or switching device, or other electronic device. System 800 includes processor 820, which provides processing, operation management, and execution of instructions for system 800. Processor 820 can include any type of microprocessor, central processing unit (CPU), processing core, or other processing hardware to provide processing for system 800. Processor 820 controls the overall operation of system 800, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

Memory subsystem 830 represents the main memory of system 800, and provides temporary storage for code to be executed by processor 820, or data values to be used in executing a routine. Memory subsystem 830 can include one or more memory devices such as read-only memory (ROM), flash memory, one or more varieties of random access memory (RAM), or other memory devices, or a combination of such devices. Memory subsystem 830 stores and hosts, among other things, operating system (OS) 836 to provide a software platform for execution of instructions in system 800. Additionally, other instructions 838 are stored and executed from memory subsystem 830 to provide the logic and the processing of system 800. OS 836 and instructions 838 are executed by processor 820. Memory subsystem 830 includes memory device 832 where it stores data, instructions, programs, or other items. In one embodiment, memory subsystem includes memory controller 834, which is a memory controller to generate and issue commands to memory device 832. It will be understood that memory controller 834 could be a physical part of processor 820.

Processor 820 and memory subsystem 830 are coupled to bus/bus system 810. Bus 810 is an abstraction that represents any one or more separate physical buses, communication lines/interfaces, and/or point-to-point connections, connected by appropriate bridges, adapters, and/or controllers. Therefore, bus 810 can include, for example, one or more of a system bus, a Peripheral Component Interconnect (PCI) bus, a HyperTransport or industry standard architecture (ISA) bus, a small computer system interface (SCSI) bus, a universal serial bus (USB), or an Institute of Electrical and Electronics Engineers (IEEE) standard 1394 bus (commonly referred to as "Firewire"). The buses of bus 810 can also correspond to interfaces in network interface 850.

System 800 also includes one or more input/output (I/O) interface(s) 840, network interface 850, one or more internal mass storage device(s) 860, and peripheral interface 870 coupled to bus 810. I/O interface 840 can include one or more interface components through which a user interacts with system 800 (e.g., video, audio, and/or alphanumeric interfacing). In one embodiment, I/O interface 840 can include a high definition (HD) display that provides an output to a user. High definition can refer to a display having a pixel density of approximately 100 PPI (pixels per inch) or greater, and can include formats such as full HD (e.g., 1080p), retina displays, 4K (ultra high definition or UHD), or others. High definition can also refer to projected displays (e.g., head-mounted displays) that have comparable visual quality to pixel displays. Network interface 850 provides system 800 the ability to communicate with remote devices (e.g., servers, other computing devices) over one or more networks. Network interface 850 can include an Ethernet adapter, wireless interconnection components, USB (universal serial bus), or other wired or wireless standards-based or proprietary interfaces.

Storage 860 can be or include any conventional medium for storing large amounts of data in a nonvolatile manner, such as one or more magnetic, solid state, or optical based disks, or a combination. Storage 860 holds code or instructions and data 862 in a persistent state (i.e., the value is retained despite interruption of power to system 800). Storage 860 can be generically considered to be a "memory," although memory 830 is the executing or operating memory to provide instructions to processor 820. Whereas storage 860 is nonvolatile, memory 830 can include volatile memory (i.e., the value or state of the data is indeterminate if power is interrupted to system 800).

Peripheral interface 870 can include any hardware interface not specifically mentioned above. Peripherals refer generally to devices that connect dependently to system 800. A dependent connection is one where system 800 provides the software and/or hardware platform on which operation executes, and with which a user interacts.

In one embodiment, system 800 includes mode control 880, which enables the system to operate memory 832 in full bandwidth or partial bandwidth modes of operation. Thus, system 800 can include one of multiple different bandwidth system data buses in memory subsystem 830 that are supported by memory 832. The same memory chips can be used in system 800 with a memory subsystem data bus that can exchange the full internal bandwidth of the memory device, or with a memory subsystem data bus that can exchange only a partial internal bandwidth amount of data with the memory device. Mode control 880 can represent configuration logic that provides settings for what mode of operation memory 832 is to use, and can represent the logic internal to memory 832 that enables the memory to select the appropriate internal routing to interface between the hardware I/O connectors of the memory and the memory arrays or memory cores (not explicitly shown).

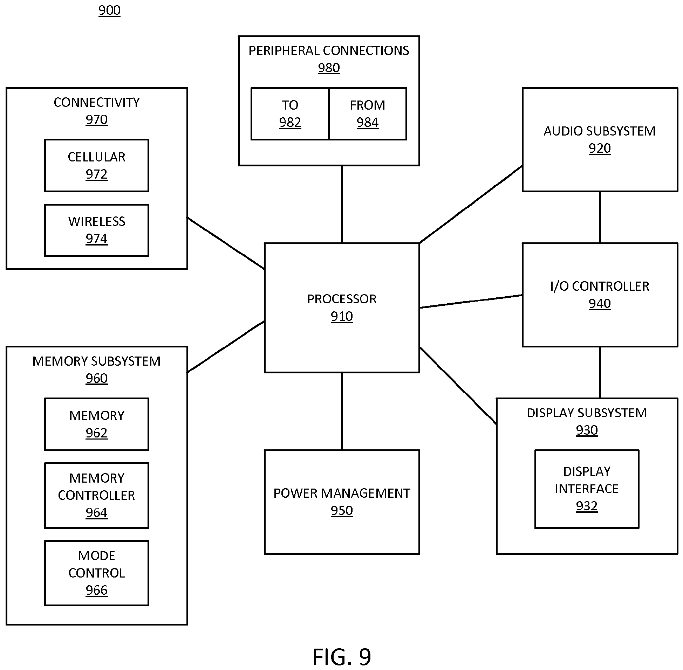

**Figure 9** is a block diagram of an embodiment of a mobile device in which common die interfacing to data buses of different bandwidth can be implemented. Device 900 represents a mobile computing device, such as a computing tablet, a mobile phone or smartphone, a wireless-enabled e-reader, wearable computing device, or other mobile device. It will be understood that certain of the components are shown generally, and not all components of such a device are shown in device 900.

Device 900 includes processor 910, which performs the primary processing operations of device 900. Processor 910 can include one or more physical devices, such as microprocessors, application processors, microcontrollers, programmable logic devices, or other processing means. The processing operations performed by processor 910 include the execution of an operating platform or operating system on which applications and/or device functions are executed. The processing operations include operations related to I/O (input/output) with a human user or with other devices, operations related to power management, and/or operations related to connecting device 900 to another device. The processing operations can also include operations related to audio I/O and/or display I/O.

In one embodiment, device 900 includes audio subsystem 920, which represents hardware (e.g., audio hardware and audio circuits) and software (e.g., drivers, codecs) components associated with providing audio functions to the computing device. Audio functions can include speaker and/or headphone output, as well as microphone input. Devices for such functions can be integrated into device 900, or connected to device 900. In one embodiment, a user interacts with device 900 by providing audio commands that are received and processed by processor 910.

Display subsystem 930 represents hardware (e.g., display devices) and software (e.g., drivers) components that provide a visual and/or tactile display for a user to interact with the computing device. Display subsystem 930 includes display interface 932, which includes the particular screen or hardware device used to provide a display to a user. In one embodiment, display interface 932 includes logic separate from processor 910 to perform at least some processing related to the display. In one embodiment, display subsystem 930 includes a touchscreen device that provides both output and input to a user. In one embodiment, display subsystem 930 includes a high definition (HD) display that provides an output to a user. High definition can refer to a display having a pixel density of approximately 100 PPI (pixels per inch) or greater, and can include formats such as full HD (e.g., 1080p), retina displays, 4K (ultra high definition or UHD), or others.

I/O controller 940 represents hardware devices and software components related to interaction with a user. I/O controller 940 can operate to manage hardware that is part of audio subsystem 920 and/or display subsystem 930. Additionally, I/O controller 940 illustrates a connection point for additional devices that connect to device 900 through which a user might interact with the system. For example, devices that can be attached to device 900 might include microphone devices, speaker or stereo systems, video systems or other display device, keyboard or keypad devices, or other I/O devices for use with specific applications such as card readers or other devices.

As mentioned above, I/O controller 940 can interact with audio subsystem 920 and/or display subsystem 930. For example, input through a microphone or other audio device can provide input or commands for one or more applications or functions of device 900. Additionally, audio output can be provided instead of or in addition to display output. In another example, if display subsystem includes a touchscreen, the display device also acts as an input device, which can be at least partially managed by I/O controller 940. There can also be additional buttons or switches on device 900 to provide I/O functions managed by I/O controller 940.

In one embodiment, I/O controller 940 manages devices such as accelerometers, cameras, light sensors or other environmental sensors, gyroscopes, global positioning system (GPS), or other hardware that can be included in device 900. The input can be part of direct user interaction, as well as providing environmental input to the system to influence its operations (such as filtering for noise, adjusting displays for brightness detection, applying a flash for a camera, or other features). In one embodiment, device 900 includes power management 950 that manages battery power usage, charging of the battery, and features related to power saving operation.

Memory subsystem 960 includes memory device(s) 962 for storing information in device 900. Memory subsystem 960 can include nonvolatile (state does not change if power to the memory device is interrupted) and/or volatile (state is indeterminate if power to the memory device is interrupted) memory devices. Memory 960 can store application data, user data, music, photos, documents, or other data, as well as system data (whether long-term or temporary) related to the execution of the applications and functions of system 900. In one embodiment, memory subsystem 960 includes memory controller 964 (which could also be considered part of the control of system 900, and could potentially be considered part of processor 910). Memory controller 964 includes a scheduler to generate and issue commands to memory device 962.

Connectivity 970 includes hardware devices (e.g., wireless and/or wired connectors and communication hardware) and software components (e.g., drivers, protocol stacks) to enable device 900 to communicate with external devices. The external device could be separate devices, such as other computing devices, wireless access points or base stations, as well as peripherals such as headsets, printers, or other devices.

Connectivity 970 can include multiple different types of connectivity. To generalize, device 900 is illustrated with cellular connectivity 972 and wireless connectivity 974. Cellular connectivity 972 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, LTE (long term evolution - also referred to as "4G"), or other cellular service standards. Wireless connectivity 974 refers to wireless connectivity that is not cellular, and can include personal area networks (such as Bluetooth), local area networks (such as WiFi), and/or wide area networks (such as WiMax), or other wireless communication. Wireless communication refers to transfer of data through the use of modulated electromagnetic radiation through a non-solid medium. Wired communication occurs through a solid communication medium.

Peripheral connections 980 include hardware interfaces and connectors, as well as software components (e.g., drivers, protocol stacks) to make peripheral connections. It will be understood that device 900 could both be a peripheral device ("to" 982) to other computing devices, as well as have peripheral devices ("from" 984) connected to it. Device 900 commonly has a "docking" connector to connect to other computing devices for purposes such as managing (e.g., downloading and/or uploading, changing, synchronizing) content on device 900. Additionally, a docking connector can allow device 900 to connect to certain peripherals that allow device 900 to control content output, for example, to audiovisual or other systems.

In addition to a proprietary docking connector or other proprietary connection hardware, device 900 can make peripheral connections 980 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other type.

In one embodiment, system 900 includes mode control 966, which enables the system to operate memory 962 in full bandwidth or partial bandwidth modes of operation. Thus, system 900 can include one of multiple different bandwidth system data buses in memory subsystem 960 that are supported by memory 962. The same memory chips can be used in system 900 with a memory subsystem data bus that can exchange the full internal bandwidth of the memory device, or with a memory subsystem data bus that can exchange only a partial internal bandwidth amount of data with the memory device. Mode control 966 can represent configuration logic that provides settings for what mode of operation memory 962 is to use, and can represent the logic internal to memory 962 that enables the memory to select the appropriate internal routing to interface between the hardware I/O connectors of the memory and the memory arrays or memory cores (not explicitly shown).

## Claims

1. A method for interfacing in a memory subsystem, comprising:
receiving a memory access command from a memory controller (112, 834) at a memory device (120, 200, 300, 400) having multiple memory arrays (122, 212, 720, 728), wherein the memory access command includes an exchange of data over a system data bus between the memory device and the memory controller; and **characterized by**
transferring data over the system data bus (130, 250, 722) during all transfer periods of a burst length associated with the memory access command, including transferring a transfer bandwidth amount of data over the system data bus, wherein the transfer bandwidth is only a subset of an available bandwidth of an internal data bus of the memory device, wherein the available bandwidth includes data from all memory arrays in a group of arrays, and the transfer bandwidth includes data from only a subset of memory arrays in the group.

2. The method of claim 1, wherein receiving the memory access command comprises receiving a memory read command, wherein the transferring further comprises:
accessing N bits of data from M memory arrays on the internal data bus; and
sending N/2 bits of accessed data over the system data bus during the transfer periods.

3. The method of claim 2, wherein sending N/2 bits of data over the system data bus further comprises sending data from only M/2 of the memory arrays.

4. The method of claim 2, wherein sending N/2 bits of data over the system data bus further comprises internally routing N/4 bits of data from one group of M/2 memory arrays and internally routing N/4 bits of data from another group of M/2 memory arrays to a common group of N/2 I/O, input/output, connectors.

5. The method of claim 2, wherein sending N/2 bits of data over the system data bus further comprises internally routing N/2 bits of data from one group of M/2 memory arrays to a group of N/2 I/O, input/output, connectors, and not sending N/2 bits of data from another group of M/2 memory arrays.

6. The method of any of claims 1 to 5, wherein receiving the memory access command comprises receiving a memory write command, wherein the memory device includes M memory arrays and the available bandwidth is N bits and the transfer bandwidth is N/2 bits, wherein the transferring further comprises:
receiving N/2 bits of data over the system data bus during the transfer periods; and
routing the N/2 bits of data to M/2 memory arrays.

7. The method of claim 6, wherein routing the N/2 bits of data to the M/2 memory arrays further comprises internally routing N/4 bits of data to one group of M/2 memory arrays and internally routing N/4 bits of data to another group of M/2 memory arrays from a common group of N/2 I/O, input/output, connectors.

8. The method of claim 6, wherein routing the N/2 bits of data to the M/2 memory arrays further comprises internally routing the N/2 bits of data to one group of M/2 memory arrays, and not routing any bits of data to another group of M/2 memory arrays.

9. The method of any of claims 1 to 8, wherein transferring the data over the system data bus is performed in accordance with one of multiple transfer modes, wherein in accordance with a first mode transferring the data comprises transferring the transfer bandwidth amount of data during all transfer periods of the burst length, and wherein in accordance with a second mode transferring the data comprises transferring the available bandwidth amount of data over the system data bus during all transfer periods of the burst length.

10. The method of any of claims 1 to 9, further comprising setting the burst length, wherein transferring the data over the system data bus includes changing the transfer bandwidth based on the burst length setting.

11. A memory device (100, 200, 300, 400, 500, 600) to interface in a memory subsystem, comprising:
multiple memory arrays (122, 212, 720, 728), each including memory storage elements to store data;
hardware I/O, input/output, connectors to couple to a memory controller (112, 834) over a system data bus (130, 250, 722);
an internal memory bus to couple the multiple memory arrays to the I/O connectors; and
logic circuits (222, 232, 234) configured to:
receive a memory access command from the memory controller, wherein the memory access command includes an exchange of data over the system data bus; **characterized by** logic circuits configured to
transfer data over the system data bus during all transfer periods of a burst length associated with the memory access command, including transferring a transfer bandwidth amount of data over the system data bus, wherein the transfer bandwidth is only a subset of an available bandwidth of an internal data bus of the memory device, wherein the available bandwidth includes data from all memory arrays in a group of arrays, and the transfer bandwidth includes data from only a subset of memory arrays in the group.

## Patentansprüche

1. Verfahren zur Verknüpfung in einem Speichersubsystem, umfassend:
Empfangen eines Speicherzugriffsbefehls von einer Speichersteuerung (112, 834) an einer Speichervorrichtung (120, 200, 300, 400) mit mehreren Speicheranordnungen (122, 212, 720, 728), wobei der Speicherzugriffsbefehl einen Austausch von Daten über einen Systemdatenbus zwischen der Speichervorrichtung und der Speichersteuerung beinhaltet; und **gekennzeichnet durch**
Übertragen von Daten über den Systemdatenbus (130, 250, 722) während aller Übertragungsperioden einer Burst-Länge, die mit dem Speicherzugriffsbefehl verknüpft ist, einschließlich der Übertragung einer Übertragungsbandbreitenmenge Daten über den Systemdatenbus, wobei die Übertragungsbandbreite nur eine Teilmenge einer verfügbaren Bandbreite eines internen Datenbusses der Speichervorrichtung ist, wobei die verfügbare Bandbreite Daten von allen Speicheranordnungen in einer Gruppe von Anordnungen aufweist und die Übertragungsbandbreite Daten von nur einer Teilmenge von Speicheranordnungen in der Gruppe aufweist.

2. Verfahren nach Anspruch 1, wobei das Empfangen des Speicherzugriffsbefehls umfasst, einen Speicherlesebefehl zu empfangen, wobei das Übertragen ferner umfasst:
Zugreifen auf N Bits Daten aus M Speicheranordnungen auf dem internen Datenbus; und
Senden von N/2 Bits Daten, auf die zugegriffen wurde, über den Systemdatenbus während der Übertragungsperioden.

3. Verfahren nach Anspruch 2, wobei das Senden von N/2 Bits Daten über den Systemdatenbus ferner umfasst, Daten nur von M/2 der Speicheranordnungen zu senden.

4. Verfahren nach Anspruch 2, wobei das Senden von N/2 Bits Daten über den Systemdatenbus ferner umfasst, intern N/4 Bits Daten von einer Gruppe von M/2 Speicheranordnungen und N/4 Bits Daten von einer anderen Gruppe von M/2 Speicheranordnungen an eine gemeinsame Gruppe von N/2 E/A-, Ein-/Ausgabe-, Anschlüssen weiterzuleiten.

5. Verfahren nach Anspruch 2, wobei das Senden von N/2 Bits Daten über den Systemdatenbus ferner umfasst, intern N/2 Bits Daten von einer Gruppe von M/2 Speicheranordnungen an eine Gruppe von N/2 E/A-, Ein-/Ausgabe-, Anschlüssen zu senden und keine N/2 Bits Daten von einer anderen Gruppe von M/2 Speicheranordnungen zu senden.

6. Verfahren nach einem der Ansprüche 1 bis 5, wobei das Empfangen des Speicherzugriffsbefehls umfasst, einen Speicherschreibbefehl zu empfangen, wobei die Speichervorrichtung M Speicheranordnungen umfasst und die verfügbare Bandbreite N Bits und die Übertragungsbandbreite N/2 Bits beträgt, wobei das Übertragen ferner umfasst:
Empfangen von N/2 Bits Daten über den Systemdatenbus während der Übertragungsperioden; und
Leiten der N/2 Bits Daten an M/2 Speicheranordnungen.

7. Verfahren nach Anspruch 6, wobei das Weiterleiten von N/2 Bits Daten an die M/2 Speicheranordnungen ferner umfasst, intern N/4 Bits Daten an eine Gruppe von M/2 Speicheranordnungen und N/4 Bits Daten an eine andere Gruppe von M/2 Speicheranordnungen von einer gemeinsamen Gruppe von N/2 E/A-, Ein-/Ausgabe-, Anschlüssen weiterzuleiten.

8. Verfahren nach Anspruch 6, wobei das Weiterleiten der N/2 Bits Daten an die M/2 Speicheranordnungen ferner umfasst, intern die N/2 Bits Daten an eine Gruppe von M/2 Speicheranordnungen weiterzuleiten und keinerlei Bits Daten an eine andere Gruppe von M/2 Speicheranordnungen weiterzuleiten.

9. Verfahren nach einem der Ansprüche 1 bis 8, wobei das Übertragen der Daten über den Systemdatenbus gemäß einem von mehreren Übertragungsmodi durchgeführt wird, wobei gemäß einem ersten Modus das Übertragen der Daten umfasst, die Übertragungsbandbreitenmenge Daten während aller Übertragungsperioden der Burst-Länge zu übertragen, und wobei gemäß einem zweiten Modus das Übertragen der Daten umfasst, die verfügbare Bandbreitenmenge Daten über den Systemdatenbus während aller Übertragungsperioden der Burst-Länge zu übertragen.

10. Verfahren nach einem der Ansprüche 1 bis 9, ferner das Einstellen der Burst-Länge umfassend,
wobei das Übertragen der Daten über den Systemdatenbus beinhaltet, die Übertragungsbandbreite basierend auf der Einstellung der Burst-Länge zu ändern.

11. Speichervorrichtung (100, 200, 300, 400, 500, 600) zum Verknüpfen in einem Speichersubsystem, umfassend:
mehrere Speicheranordnungen (122, 212, 720, 728), die jeweils Speicherelemente zum Speichern von Daten aufweisen;
Hardware-E/A-, Ein-/Ausgabe-, Anschlüsse zum Koppeln mit einer Speichersteuerung (112, 834) über einen Systemdatenbus (130, 250, 722);
einen internen Speicherbus zum Koppeln der mehreren Speicheranordnungen mit den E/A-Anschlüssen;
und
Logikschaltungen (222, 232, 234), die dafür ausgelegt sind:
einen Speicherzugriffsbefehl von der Speichersteuerung zu empfangen, wobei der Speicherzugriffsbefehl einen Datenaustausch über den Systemdatenbus beinhaltet; **gekennzeichnet durch** Logikschaltungen, die ausgelegt sind zum:
Übertragen von Daten über den Systemdatenbus während aller Übertragungsperioden einer Burst-Länge, die dem Speicherzugriffsbefehl zugeordnet ist, einschließlich der Übertragung einer Übertragungsbandbreitenmenge Daten über den Systemdatenbus, wobei die Übertragungsbandbreite nur eine Teilmenge einer verfügbaren Bandbreite eines internen Datenbusses der Speichervorrichtung ist, wobei die verfügbare Bandbreite Daten von allen Speicheranordnungen in einer Gruppe von Anordnungen aufweist und die Übertragungsbandbreite Daten von nur einer Teilmenge von Speicheranordnungen in der Gruppe aufweist.

## Revendications

1. Procédé d'interfaçage dans un sous-système de mémoire, comprenant :
la réception d'une commande d'accès à la mémoire depuis un contrôleur de mémoire (112, 834) au niveau d'un dispositif de mémoire (120, 200, 300, 400) présentant de multiples matrices de mémoire (122, 212, 720, 728), la commande d'accès à la mémoire comportant un échange de données sur un bus de données système entre le dispositif de mémoire et le contrôleur de mémoire ; et **caractérisé par**
le transfert de données sur le bus de données système (130, 250, 722) durant toutes les périodes de d'une longueur de salve associée à la commande d'accès à la mémoire, comportant le transfert d'une quantité de données de largeur de bande de transfert sur le bus de données système, dans lequel la largeur de bande de transfert n'est qu'un sous-ensemble d'une largeur de bande disponible d'un bus de données interne du dispositif de mémoire, dans lequel la largeur de bande disponible comporte des données provenant de toutes les matrices de mémoire dans un groupe de matrices, et la largeur de bande de transfert comporte des données provenant uniquement d'un sous-ensemble de matrices de mémoire dans le groupe.

2. Procédé selon la revendication 1, dans lequel la réception de la commande d'accès à la mémoire comprend la réception d'une commande de lecture de mémoire, dans lequel le transfert comprend en outre :
la sollicitation de N bits de données depuis M matrices de mémoire sur le bus de données interne ; et
l'envoi de N/2 bits de données sollicitées sur le bus de données système durant les périodes de transfert.

3. Procédé selon la revendication 2, dans lequel l'envoi de N/2 bits de données sur le bus de données système comprend en outre l'envoi de données depuis seulement M/2 des matrices de mémoire.

4. Procédé selon la revendication 2, dans lequel l'envoi de N/2 bits de données sur le bus de données système comprend en outre le routage interne de N/4 bits de données depuis un groupe de M/2 matrices de mémoire et le routage interne de N/4 bits de données depuis un autre groupe de M/2 matrices de mémoire vers un groupe commun de N/2 connecteurs d'entrée/sortie, I/O.

5. Procédé selon la revendication 2, dans lequel l'envoi de N/2 bits de données sur le bus de données système comprend en outre le routage interne de N/2 bits de données depuis un groupe de M/2 matrices de mémoire vers un groupe de N/2 connecteurs d'entrée/sortie, I/O, et non l'envoi de N/2 bits de données depuis un autre groupe de M/2 matrices de mémoire.

6. Procédé selon l'une quelconque des revendications 1 à 5, dans lequel la réception de la commande d'accès à la mémoire comprend la réception d'une commande d'écriture de mémoire, dans lequel le dispositif de mémoire comporte M matrices de mémoire et la largeur de bande disponible est de N bits et la largeur de bande de transfert est de N/2 bits, dans lequel le transfert comprend en outre :
la réception de N/2 bits de données sur le bus de données système durant les périodes de transfert ; et
le routage des N/2 bits de données vers M/2 matrices de mémoire.

7. Procédé selon la revendication 6, dans lequel le routage des N/2 bits de données vers les M/2 matrices de mémoire comprend en outre le routage interne de N/4 bits de données vers un groupe de M/2 matrices de mémoire et le routage interne de N/4 bits de données vers un autre groupe de M/2 matrices de mémoire depuis un groupe commun de N/2 connecteurs d'entrée/sortie, I/O.

8. Procédé selon la revendication 6, dans lequel le routage des N/2 bits de données vers les M/2 matrices de mémoire comprend en outre le routage interne des N/2 bits de données vers un groupe de M/2 matrices de mémoire, et non le routage de bits de données vers un autre groupe de M/2 matrices de mémoire.

9. Procédé selon l'une quelconque des revendications 1 à 8, dans lequel le transfert des données sur le bus de données système est réalisé conformément à l'un de multiples modes de transfert, dans lequel conformément à un premier mode le transfert des données comprend le transfert de la quantité de données de largeur de bande de transfert durant toutes les périodes de transfert de la longueur de salve, et dans lequel conformément à un second mode le transfert des données comprend le transfert de la quantité de données de largeur de bande disponible sur le bus de données système durant toutes les périodes de transfert de la longueur de salve.

10. Procédé selon l'une quelconque des revendications 1 à 9, comprenant en outre le réglage de la longueur de salve, dans lequel le transfert des données sur le bus de données système comporte la modification de la largeur de bande de transfert sur la base du réglage de longueur de salve.

11. Dispositif de mémoire (100, 200, 300, 400, 500, 600) destiné à s'interfacer dans un sous-système de mémoire, comprenant :
de multiples matrices de mémoire (122, 212, 720, 728), chacune comportant des éléments de mémorisation pour mémoriser des données ;
des connecteurs matériels d'entrée/sortie I/O, destinés à être couplés à un contrôleur de mémoire (112, 834) sur un bus de données système (130, 250, 722) ;
un bus mémoire interne destiné à coupler les multiples matrices de mémoire aux connecteurs I/O ;
et des circuits logiques (222, 232, 234) configurés pour :
recevoir une commande d'accès à la mémoire depuis le contrôleur de mémoire, la commande d'accès à la mémoire comportant un échange de données sur le bus de données système ;
**caractérisé par** des circuits logiques configurés pour
transférer des données sur le bus de données système durant toutes les périodes de transfert d'une longueur de salve associée à la commande d'accès à la mémoire, comportant le transfert d'une quantité de données de largeur de bande de transfert sur le bus de données système, dans lequel la largeur de bande de transfert n'est qu'un sous-ensemble d'une largeur de bande disponible d'un bus de données interne du dispositif de mémoire, dans lequel la largeur de bande disponible comporte des données provenant de toutes les matrices de mémoire dans un groupe de matrices, et la largeur de bande de transfert comporte des données provenant uniquement d'un sous-ensemble de matrices de mémoire dans le groupe.
